# EUROPÄISCHE PATENTSCHRIFT

(11) **EP 2 742 789 B1**
(45) Veröffentlichungstag und Bekanntmachung des Hinweises auf die Patenterteilung: **24.02.2016**
(21) Anmeldenummer: 13401131.1
(22) Anmeldetag: 05.12.2013
(51) Int. Cl.: A01C 15/00

(54) **Verteilmaschine, insbesondere ein Streugerät**
Distributor, in particular a spreading device
Machine de distribution, en particulier appareil d'épandage

(30) Priorität: 17.12.2012 DE 102012112372
(43) Veröffentlichungstag der Anmeldung: 18.06.2014
(73) Patentinhaber: Amazonen-Werke H. Dreyer GmbH & Co. KG, 49205 Hasbergen (DE)
(72) Erfinder: Giehoff, Stefan, 49205 Hasbergen (DE); Johannaber, Stefan Jan, 49536 Lienen (DE); Walter, Achim, 49078 Osnabrück (DE)

(56) Entgegenhaltungen:
- DE-A1- 19 501 528
- DE-A1-102008 024 336
- DE-B1- 2 835 011
- FR-A1- 2 588 836

## Beschreibung

Die Erfindung betrifft eine Verteilmaschine, insbesondere ein Streugerät gemäß des Patentanspruches 1.

Eine derartige Verteilmaschine ist in der DE 28 35 011 beschrieben. Diese Verteilmaschine ist als Streugerät ausgebildet. Das Streugerät weist eine Exzenterantriebsvorrichtung für das Rührorgan auf. Die Exzenterantriebsvorrichtung überträgt über eine starre Antriebsverbindung Hubbewegungen auf einen Freilauf, der die Hubbewegung in eine Drehschrittbewegung umwandelt und diese auf die Rührwelle und das am Ende angeordnete Rührorgan überträgt. Von Nachteil ist bei diesem Streugerät, wenn das Rührorgan in Drehrichtung auf einen starren Körper trifft und diesen nicht bei Seite bewegen kann. Tritt dieser Fall ein, will der Freilauf weiterhin die Hubbewegung in eine Drehschrittbewegung umwandeln. Es wird so eine große Kraft auf den das Rührorgan blockierenden Körper aufgebracht, bis ein Bauteil der entgegengebrachten Kraft nachgibt und dadurch zerstört wird. Des Weiteren kann bei Kontakt eines menschlichen Körperteils mit dem Rührorgan dieses zu einer Verletzung führen.

Weiterhin ist hier ein Streuer beschrieben, der eine waagerecht angeordnete Rührwelle in den unteren Trichterbereichen des Vorratsbehälters aufweist. Auf den Wellenenden der Rührwelle sind die Rührorgane angeordnet. Die Rührwelle ist durch die Trichterwand des dachförmigen Mittelteils des Vorratsbehälters hindurchgeführt. Die Rührwelle wird in einer Ausgestaltung über einen Freilauftrieb schubweise in Drehung versetzt. Nachteilig ist bei dieser Ausführung, dass keine Abschaltvorrichtung vorgesehen ist. Wird beispielsweise durch fehlerhaftes Verhalten des Anwenders der Vorratsbehälter bei rotierender Rührwelle betreten und von dieser erfasst, ist eine hohe Unfallgefahr gegeben, weil keine Überlastsicherheit verbaut ist. Weiterhin ist das Nichtvorhandensein eines Überlastschutzes im Antrieb der Rührwelle auch in dem Fall nachteilig, wenn unzerdrückbare Gegenstände zwischen der Trichterwand und den Rührelementen gelangen.

Weiterhin zeigt der FR 2 588 836 eine Verteilmaschine der eingangs genannten Art.

Der Erfindung liegt die Aufgabe zu Grunde, einen einfach ausgestalteten Überlastschutz mit gleichzeitiger Außerbetriebssetzfunktion des Rührorgans in die Rührwerksvorrichtung zu integrieren, um die zuvor beschriebenen Nachteile zu vermeiden.

Die Aufgabe wird erfindungsgemäß durch die Merkmale des Anspruches 1 gelöst. Hierbei wirkt das Verbindungselement, sowie der Freilauf als Abschaltelement und/oder Überlastschutz. Es ist also in einfacher Weise ein sehr hoher Unfallschutz gegeben. Durch die erfindungsgemäße Ausgestaltung des Verbindungselementes in Verbindung mit dem entsprechenden Freilau setzt sich das Rührorgan quasi selber still bzw. schaltet sich selber ab. Die Antriebskräfte werden von dem drehelastischen Verbindungselement oder von der Torsionsfeder aufgenommen.

Um einen einfach ausgestalteten Überlastschutz mit gleichzeitiger Außerbetriebssetzfunktion des Rührorgans in die Rührwerksvorrichtung zu integrieren, ist erfindungsgemäß in einer Ausgestaltung vorgesehen, dass das zwischen Antriebseinheit und Rührorgan angeordnete Verbindungselement drehelastisch und/oder als Torsionsfeder ausgebildet ist. Hierbei wirkt das Verbindungselement der Rührvorrichtung, welches zwischen der Antriebsvorrichtung und dem Rührorgan angeordnet ist, als Abschaltelement und/oder Überlastschutz. Es ist also in einfacher Weise ein sehr hoher Unfallschutz gegeben.

Damit die Rührvorrichtung immer in seine vorgesehene Position sich befindet, ist vorgesehen, dass das Verbindungselement biegesteif ausgebildet ist.

In einfacher Weise lässt sich das drehelastische Verbindungselement dadurch verwirklichen, dass das Verbindungselement als zumindest eine langgestreckte Blattfeder ausgebildet und als ein mit mehreren nebeneinander angeordnete Blattfedern ausgebildetes Federpaket ist. Ein derartiges Federpaket kann einfach zwischen der Antriebsvorrichtung und Rührorgan angeordnet werden und begünstigt den Effekt der gewollten Torsion des Verbindungselementes.

Um eine biegesteife Ausgestaltung des Verbindungspaketes zu verwirklichen, ist vorgesehen, dass eine im Vorratsbehälter angeordnete und/oder in diesen hineinragende Hohlwelle vorgesehen ist, dass in dieser Hohlwelle das drehelastische Verbindungselement angeordnet ist. Durch die Anordnung der Blattfedern in der Hohlwelle, wird eine Auslenkung der Blattfedern, die das Verbindungselement bilden, vermieden. Die Hohlwelle ragt in den Vorratsbehälter hinein und führt hier auch die Blattfedern. Darüber hinaus deckt die Hohlwelle das Blattfedern ausgebildete Verbindungselement ab, so dass ein verbesserter Unfallschutz erreicht wird.

Um eine Führung und Lagerung des Verbindungselementes zu erreichen, ist vorgesehen, dass die Hohlwelle mittels Lagerelementen drehbar angeordnet ist.

Eine Verschmutzung im Innenbereich der Hohlwelle wird dadurch verhindert, dass sich an dem freien Ende der Hohlwelle sich das mit dem Verbindungselement verbundene Rührelement vorzugsweise unmittelbar anschließt. So wird vermieden, dass Verunreinigungen wie beispielsweise durch Schmutz und/oder Dünger in die Hohlwelle gelangt.

Eine einfache Ausgestaltung der Verbindungsaufnahmen lässt sich dadurch erreichen, dass der Wellenansatz der Antriebseinheit an ihrem freien Ende und der mit dem Rührorgan verbundene Befestigungsabschnitt jeweils zumindest einen schlitzartigen Ansatz aufweisen, und dass in diesen schlitzartigen Ansätzen das vorzugweise als mehrere Blattfedern ausgebildete, drehelastische Verbindungselement angeordnet ist.

Um eine einfache Verbindung der Aufnahme des aus mehreren Blattfedern bestehenden drehelastischen Federpaketes mit der Antriebseinrichtung und dem Rührorgan zu ermöglichen, ist vorgesehen, dass die Hohlwelle zu dem freien Wellenansatz der Antriebseinheit an ihrem Ende zumindest einfach geschlitzt ausgebildet ist und den Wellenansatz der Antriebseinheit zumindest teilweise überragt.

Eine weitere vorteilhafte Ausführung der Verbindungen ergibt sich dadurch, dass der Wellenansatz der Antriebseinheit an ihrem freien Ende ein kreuzschlitzartiges Profil und der mit dem Rührorgan verbundene Befestigungsabschnitt einen schlitzartigen Ansatz aufweist, und dass in diesen Ansätzen, das vorzugsweise als Kreuzprofilwelle ausgebildete, drehelastische Verbindungselement angeordnet ist.

Eine einfache drehfeste Verbindung von Antriebseinheiten und Verbindungselement wird dadurch erreicht, dass die Antriebseinheit mit dem Verbindungselement formschlüssig verbunden ist.

Des Weiteren ist vorgesehen, dass das drehelastische Verbindungselement gegenüber der Antriebeinheit und des Rührorgans vorgespannt werden kann.

Weitere Einzelheiten der Erfindung sind den übrigen Unteransprüchen, der Beispielbeschreibung und den Zeichnungen zu entnehmen. Hierbei zeigen:

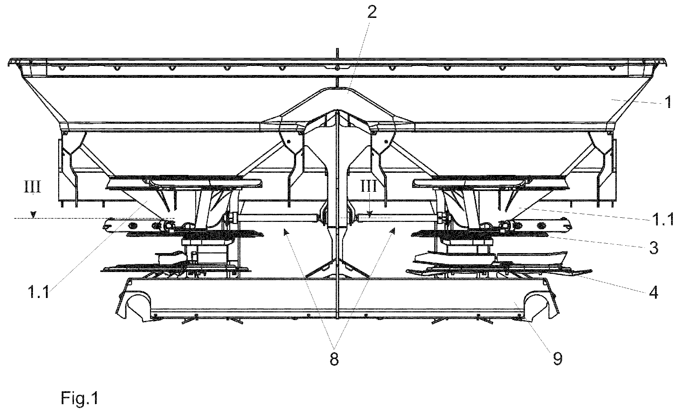

- Fig.1: in der Ansicht von hinten,

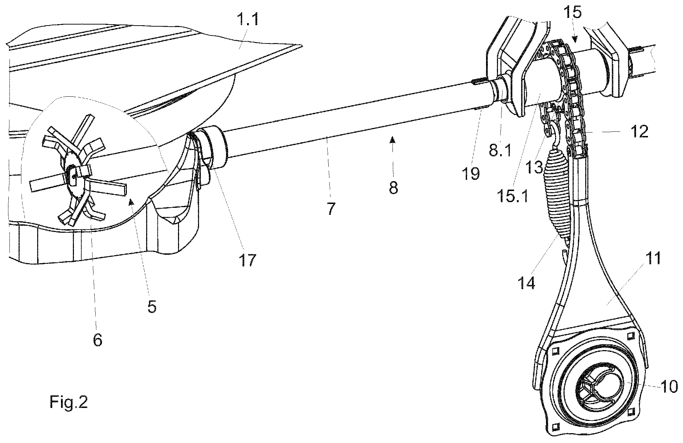

- Fig.2: eine Rühreinrichtung mit Antriebseinheit der ausschnittsweise dargestellten und als Streuer ausgebildeten Verteilmaschine in vergrößertem Maßstab und perspektivischer Darstellung,

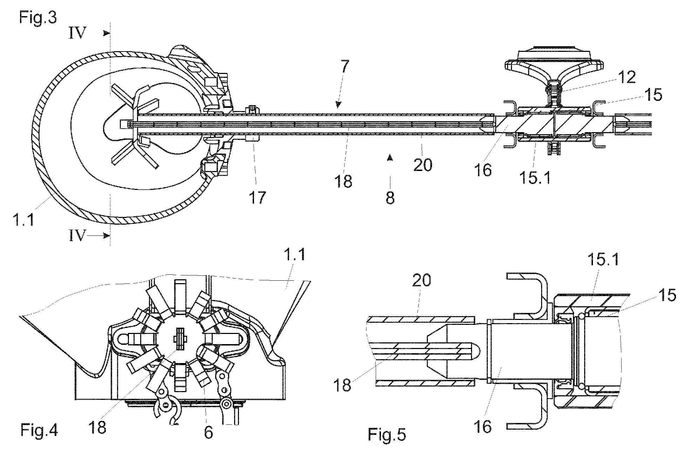

- Fig.3: die Rühreinrichtung Schnittansicht III - III mit angeordnetem Federpaket als Verbindungselement,
- Fig.4: die Rühreinrichtung in der Ansicht IV - IV,
- Fig.5: der Befestigungsabschnitt der Antriebswelle und dem Verbindungselementes in der Ansicht gemäß Fig.3, jedoch ausschnittsweise und vergrößertem Maßstab,

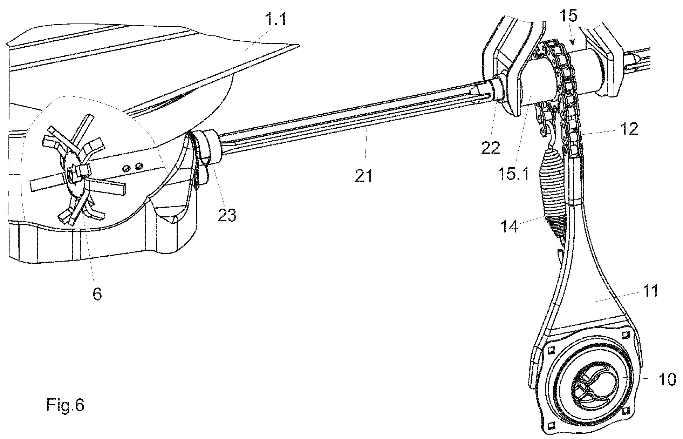

- Fig.6: weitere Rühreinrichtung mit angeordneter Kreuzprofilwelle als Verbindungselement in der Darstellungsweise gemäß Fig.2,

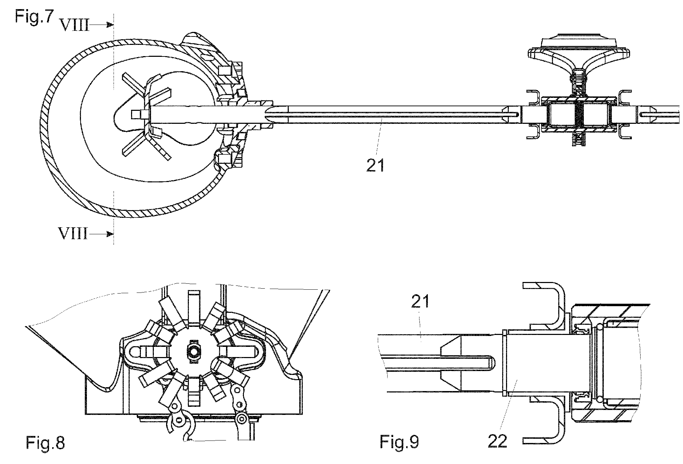

- Fig.7: die Rühreinrichtung gemäß Fig.6 mit Darstellung der Stirnseite des Rührorgans im Schnitt III - III,
- Fig. 8: die Rühreinrichtung in der Ansicht VIII - VIII und
- Fig.9: der Befestigungsabschnitt der Antriebswelle und dem Verbindungselementes in der Ansicht gemäß Fig.7, jedoch ausschnittsweise und vergrößertem Maßstab.

Die als Streugerät ausgebildete Verteilmaschine ist als Zentrifugalstreuer ausgebildet. Der Vorratsbehälter 1 ist durch ein dachförmiges Mittelteil 2 in die beiden Trichterspitzen 1.1 aufgeteilt. Die unteren Enden der Trichterspitzen 1.1 sind jeweils eine Dosiereinrichtung 3 abgeschlossen. Die Dosiervorrichtung 3 führt das sich im Vorratsbehälter 1 befindliche und zu verteilende Streugut in einstellbaren Mengen den unterhalb der Dosiereinrichtung 3 angeordneten und mit zwei Wurfschaufeln besetzten Schleuderscheiben 4 zu. Des Weiteren ist im Bereich der Trichterspitzen 2 eine Rührvorrichtung 5 angeordnet.

Die Rührvorrichtung 5 weist das Rührorgan 6, das drehelastische Verbindungselement 7 und die Antriebsverbindung 8 auf und wird von einer nicht dargestellten motorischen Antriebsvorrichtung angetrieben.

Die Antriebswelle der Rührvorrichtung 5 ist an ihrem einen Ende mittels eines Lagers am Rahmen 9 des Streuers gelagert. An der Antriebswelle ist die Exzenterscheibe 10 drehfest angeordnet. An der Exzenterscheibe 10 ist eine Pleuelstange 11 angelenkt. An das dem Exzenter abgewandte Ende der Pleuelstange 11 ist eine Rollenkette 12 angeordnet, die umgelenkt über ein Zahnrad 13 über eine Zugfeder 13 am Rahmen 9 des Streuers befestigt ist. Das Zahnrad 13 ist drehfest mit dem Gehäuse 15.1 eines der Rührvorrichtung 5 zugeordneten Freilaufes 15 verbunden. Das Antriebselement des Freilaufes 15 ist drehfest mit der Rührwelle 8.1 der Rührvorrichtung 5 verbunden. Die durch die Rotation der Exzenterscheibe 10 erzeugte Hubbewegung der Pleuelstange 11, wird von der Rollenkette 12 auf das Zahnrad 13 übertragen. Die an der Rollenkette 12 angeordnete Zugfeder 14 hält die Rollenkette 12 auf dem Zahnrad 13 und dreht beim Rückhub des Pleuls 11 das Gehäuse 15.1 des Freilaufes 15 zurück. Das Zahnrad 13 ist über einen Freilauf 15 mit der Antriebswelle 16 verbunden. Die Antriebswelle ist am Rahmen 9 des Streuers angeordnet. Durch den Freilauf 15 wird eine Drehbewegung der Antriebswelle 16, durch die von der Exzenterscheibe 10 und der Pleuelstange 11 erzeugten hin- und hergehenden Hubbewegung und der erzeugten Hin- und Herdrehung des Gehäuses, in nur eine Richtung erzeugt.

Die Antriebswelle 16 ist mit über ein drehelastischen Verbindungselement 7 mit dem Rührorgan 6 verbunden, welches in der Trichterspitze 1.1 angeordnet ist. Das Verbindungselement 7 ist an der Trichterspitze 1.1 mittels einer Lagerung 17 angeordnet. Wenn unzerdrückbare Gegenstände zwischen den Rührorganen 6 und den Wandungen des Vorratsbehälters 1 gelangen sollten, kommt es zum Blockieren der Rührvorrichtung 5. In diesem Fall kann sich das Verbindungselement 7 elastisch verdrehen. Damit die Streckgrenze des Verbindungselementes 7 nicht überschritten werden kann und es somit zu keinem Bruch des Verbindungselementes 7 kommt, darf der Verdrehwinkel des Verbindungselementes 7 zu dem Verdrehwinkel des nur in eine Richtung verdrehenden Freilaufs 15 größer- oder zumindest gleich groß sein.

Des Weiteren kann es so zu keiner Beschädigung an den Rühr- und/oder Dosiervorrichtung 3, 5, an der Antriebsvorrichtung oder beispielsweise menschlichen Körperteilen kommen.

Um das Verbindungselement 7 in einfacher Weise drehelastisch auszuführen, ist es als Blattfederpaket 18 ausgeführt. Die Blattfedern des Federpaketes 18 sind drehfest in den in den Enden der Antriebswelle 16 und des Rührorgans 6 angebrachten Schlitzen angeordnet. Das Federpaket 18 wird durch aufeinandergelegte Blattfedern ausgebildet, die an einem Ende eine Sicherungsnase 19 aufweist. Die Sicherungsnase 19 wird in den schlitzartig ausgebildeten Wellenansatz der Antriebswelle 16 aufgenommen. Damit das Federpaket 18 ohne eine Verbiegung geführt werden kann, wird eine Hohlwelle 20 mit geschlitzten Enden über das Federpaket 18 auf den Wellenansatz der Antriebswelle 16 geschoben und durch die eingeschobenen Sicherungsnasen 19 gegen eine Verdrehung gesichert. Das andere Ende des Federpaketes 18 ragt in der Mitte des Rührorgans 6 schlitzartig ausgestaltete Profil und ist mit diesem drehfest befestigt. Die aufgeschobene Hohlwelle 20 liegt bündig mit ihrer Stirnseite an dem Rührorgan 6 an und lässt so keine Verschmutzungen in den Innenbereich der Hohlwelle 20 gelangen. Des Weiteren ist die Hohlwelle 20 an der Trichterspitze 2 gelagert. Das in der Hohlwelle angeordnete Blattfederpaket 18 kann sich bei Blockade des Rührorganes 6 gegenüber der Hohlwelle 20 frei verdrehen.

Um bei einer Blockade des Rührorgans 6 durch einen unzerdrückbaren Gegenstand ist das zwischen dem Freilauf 15 und dem Rührorgan 6 angeordnete als Blattfederpaket 18 ausgebildete Verbindungselement 7 drehelastisch und als Torsionselement ausgebildet und zwar derart, dass dieses Verbindungselement 7 bzw. das Blattfederpaket einen Verdrehwinkel des Verbindungselementes 7 bzw. des Blattfederpaketes 18 zwischen dem Freilauf 15 und dem Rührorgan 6 ermöglicht, der zumindest gleich oder größer als der vom Exzenter 10 erzeugte Verdrehwinkel an dem Gehäuse 15.1 des Freilaufes 15 ist.

Eine weitere Möglichkeit ist die Ausgestaltung des Verbindungselementes durch eine Kreuzprofilwelle 21. Die Kreuzprofilwelle 21 sitzt formschlüssig in einem entsprechend kreuzgeschlitzten Wellenansatz der Antriebswelle 22. Das abgewandte Ende weist ein Vollwellenprofil auf, auf der die Lagerstelle 23 angeordnet ist. Zudem ist das Wellenende mit einem schlitzartigen Profil ausgestaltet, das formschlüssig in das schlitzartige Profil des Rührorgans 6 eingefügt und mit diesem befestigt wird.

## Patentansprüche

1. Verteilmaschine, insbesondere ein Streugerät mit Vorratsbehälter (1), einer vorzugsweise im unteren Bereich des Vorratsbehälter (1) angeordneten und Rührorgan (6) aufweisende vorzugsweise Rührvorrichtung (5), die sich vorzugsweise oberhalb einer Dosiereinrichtung (3) befindet, wobei die Rührvorrichtung (5) mittels einem von einem angetriebenen Exzenterantrieb betätigten Freilauf (15) in nur in eine Richtung verlaufende Drehbewegung versetzt wird, wobei zwischen dem Freilauf (15) und dem Rührorgan (6) der Rührwerkeinrichtung (5)ein Verbindungselement (7) angeordnet ist, wobei dass das zwischen dem Freilauf (15) und dem Rührorgan (6) angeordnete Verbindungselement (7, 18) drehelastisch und/oder als Torsionselement ausgebildet ist, **dadurch gekennzeichnet, dass** dieses Verbindungselement (7, 18) einen Verdrehwinkel des Verbindungselementes (7. 18) zwischen dem Freilauf (15) und dem Rührorgan (6) gegenüber dem Rührorgan (6) ermöglicht, der zumindest gleich oder größer als der vom Exzenter (10) erzeugte Verdrehwinkel an dem Gehäuse (15.1) des Freilaufes (15) ist, und , dass der Freilauf (15) zwischen dem Innenring und Außenring (15.1) kraftübertragende Elemente aufweist, die in Drehrichtung eine Kraft übertragen und gegen die Drehrichtung nicht auf den Innenring und Außenring (15.1) wirken.

2. Verteilmaschine nach Anspruch 1, **dadurch gekennzeichnet, dass** die durch die Exzenterscheibe (10) translatorisch erzeugte Bewegung den Verdrehwinkel des Freilaufs (15) bestimmt.

3. Verteilmaschine nach zumindest einem der vorstehenden Ansprüchen, **dadurch gekennzeichnet, dass** das Verbindungselement (7, 18) zwischen einer Antriebseinheit (10) und Rührorgan (6) ausgebildet ist.

4. Verteilmaschine nach zumindest einem der vorstehenden Ansprüchen, **dadurch gekennzeichnet, dass** das Verbindungselement (7) durch ein vorzugsweise aus Blattfedern bestehendes Federpaket (18) und/oder einer Kreuzprofilwelle ausgestaltet ist.

5. Verteilmaschine nach zumindest einem der vorstehenden Ansprüchen, **dadurch gekennzeichnet, dass** das zwischen Antriebseinheit und Rührorgan (6) angeordnete Verbindungselement (7) drehelastisch und/oder als Torsionsfeder (18) ausgebildet ist.

6. Verteilmaschine nach zumindest einem der vorstehenden Ansprüchen, **dadurch gekennzeichnet, dass** das Verbindungselement (7) biegesteif ausgebildet ist.

7. Verteilmaschine nach zumindest einem der vorstehenden Ansprüchen, **dadurch gekennzeichnet, dass** das Verbindungselement (7) als zumindest eine langgestreckte Blattfeder ausgebildet und als ein mit mehreren nebeneinander angeordnete Blattfedern ausgebildetes Federpaket (18) ist.

8. Verteilmaschine nach zumindest einem der vorstehenden Ansprüchen, **dadurch gekennzeichnet, dass** eine im Vorratsbehälter (1) angeordnete und/oder in diesen hineinragende Hohlwelle (20) vorgesehen ist, dass in dieser Hohlwelle (20) das drehelastische Verbindungselement angeordnet ist.

9. Verteilmaschine nach Anspruch 8, **dadurch gekennzeichnet, dass** die Hohlwelle (20) mittels Lagerelementen (17) drehbar angeordnet ist.

10. Verteilmaschine nach einem der Ansprüche 8 oder 9, **dadurch gekennzeichnet, dass** sich an dem freien Ende der Hohlwelle (20) sich das mit dem Verbindungselement (7, 18) verbundene Rührelement (6) vorzugsweise unmittelbar anschließt.

11. Verteilmaschine nach zumindest einem der vorstehenden Ansprüchen, **dadurch gekennzeichnet, dass** der Wellenansatz der Antriebseinheit an ihrem freien Ende und der mit dem Rührorgan (6) verbundene Befestigungsabschnitt jeweils zumindest einen schlitzartigen Ansatz aufweisen, und dass in diesen schlitzartigen Ansätzen, das vorzugweise als mehrere Blattfedern (18) ausgebildete, drehelastische Verbindungselement (7) angeordnet ist.

12. Verteilmaschine nach einem der Ansprüche 8 bis 10, **dadurch gekennzeichnet, dass** die Hohlwelle (20) zu dem freien Wellenansatz (21) der Antriebseinheit an ihrem Ende zumindest einfach geschlitzt ausgebildet ist und den Wellenansatz der Antriebseinheit zumindest teilweise überragt.

13. Verteilmaschine nach dem Anspruch 12, **dadurch gekennzeichnet, dass** der Wellenansatz (21) der Antriebseinheit an ihrem freien Ende ein kreuzschlitzartiges Profil und der mit dem Rührorgan verbundene Befestigungsabschnitt einen schlitzartigen Ansatz aufweist, und dass in diesen Ansätzen, das vorzugsweise als Kreuzprofilwelle ausgebildete, drehelastische Verbindungselement (18) angeordnet ist.

14. Verteilmaschine mit Vorratsbehälter nach zumindest einer der vorstehenden Ansprüche, **dadurch gekennzeichnet, dass** die Antriebseinheit mit dem Verbindungselement (7, 18) formschlüssig verbunden ist.

15. Verteilmaschine nach zumindest einem der vorstehenden Ansprüchen, **dadurch gekennzeichnet, dass** das drehelastische Verbindungselement (7, 18) gegenüber der Antriebeinheit und des Rührorgans (6) vorgespannt werden kann.

## Claims

1. Distributor, in particular a spreading device with a storage container (1), a stirring apparatus (5) which is preferably arranged in the lower region of the storage container (1) and preferably has a stirring member (6) and is preferably located above a metering means (3), wherein the stirring apparatus (5) is set into a rotational movement, which runs only in one direction, by means of a free wheel (15) actuated by a driven eccentric drive, wherein a connecting element (7) is arranged between the free wheel (15) and the stirring member (6) of the stirring apparatus (5), wherein the connecting element (7, 18) arranged between the free wheel (15) and the stirring member (6) is torsionally elastic and/or designed as a torsion element, **characterized in that** the said connecting element (7, 18) permits an angle of torsion of the connecting element (7, 18) between the free wheel (15) and the stirring member (6) in relation to the stirring member (6), said angle of torsion being at least identical to, or greater than, the angle of torsion, which is produced by the eccentric (10), at the housing (15.1) of the free wheel (15), and **in that** the free wheel (15) has, between the inner ring and outer ring (15.1), force-transmitting elements which transmit a force in the direction of rotation and do not act on the inner ring and outer ring (15.1) counter to the direction of rotation.

2. Distributor according to Claim 1, **characterized in that** the movement produced in a translator manner by the eccentric disc (10) determines the angle of torsion of the free wheel (15).

3. Distributor according to at least one of the preceding claims, **characterized in that** the connecting element (7, 18) is formed between a drive unit (10) and stirring member (6).

4. Distributor according to at least one of the preceding claims, **characterized in that** the connecting element (7) is formed by a spring package (18) which preferably consists of leaf springs, and/or a cross profile shaft.

5. Distributor according to at least one of the preceding claims, **characterized in that** the connecting element (7) arranged between drive unit and stirring member (6) is torsionally elastic and/or designed as a torsion spring (18).

6. Distributor according to at least one of the preceding claims, **characterized in that** the connecting element (7) is of flexurally rigid design.

7. Distributor according to at least one of the preceding claims, **characterized in that** the connecting element (7) is designed as at least one elongate leaf spring and as a spring package (18) formed with a plurality of leaf springs arranged next to one another.

8. Distributor according to at least one of the preceding claims, **characterized in that** a hollow shaft (20) which is arranged in the storage container (1) and/or projects into the latter is provided, **in that** the torsionally elastic connecting element is arranged in said hollow shaft (20).

9. Distributor according to Claim 8, **characterized in that** that the hollow shaft (20) is arranged rotatably by means of bearing elements (17).

10. Distributor according to either of Claims 8 and 9, **characterized in that** the stirring element (6) connected to the connecting element (7, 18) preferably directly adjoins the free end of the hollow shaft (20).

11. Distributor according to at least one of the preceding claims, **characterized in that** the shaft extension of the drive unit, at the free end thereof, and the fastening portion, which is connected to the stirring member (6), each have at least one slot-like extension, and **in that** the torsionally elastic connecting element (7), which is preferably in the form of a plurality of leaf springs (18), is arranged in said slot-like extension.

12. Distributor according to one of Claims 8 to 10, **characterized in that** the hollow shaft (20) is designed with at least a single slot with respect to the free shaft extension (21) of the drive unit, at the end thereof, and at least partially projects over the shaft extension of the drive unit.

13. Distributor according to Claim 12, **characterized in that** the shaft extension (21) of the drive unit, at the free end thereof, has a cross-slot-like profile and the fastening portion connected to the stirring member has a slot-like extension, and **in that** the torsionally elastic connecting element (18) which is preferably in the form of a cross profile shaft is arranged in said extension.

14. Distributor with a storage container according to at least one of the preceding claims, **characterized in that** the drive unit is connected to the connecting element (7, 18) in a form-fitting manner.

15. Distributor according to at least one of the preceding claims, **characterized in that** the torsionally elastic connecting element (7, 18) can be prestressed in relation to the drive unit and the stirring member (6) .

## Revendications

1. Machine de distribution, en particulier appareil d'épandage comprenant un récipient de stockage (1), un dispositif agitateur (5) disposé de préférence dans la région inférieure du récipient de stockage (1) et présentant de préférence un organe agitateur (6), qui se trouve de préférence au-dessus d'un dispositif de dosage (3), le dispositif agitateur (5) étant animé d'un mouvement de rotation s'étendant seulement dans une direction au moyen d'une roue libre (15) actionnée par un entraînement d'excentrique, entre la roue libre (15) et l'organe agitateur (6) du dispositif agitateur (5) étant disposé un élément de liaison (7), l'élément de liaison (7, 18) disposé entre la roue libre (15) et l'organe agitateur (6) étant réalisé sous forme élastique rotative et/ou sous forme d'élément de torsion, **caractérisée en ce que** cet élément de liaison (7, 18) permet un angle de rotation de l'élément de liaison (7, 18) entre la roue libre (15) et l'organe agitateur (6) par rapport à l'organe agitateur (6), qui est au moins identique ou supérieur à l'angle de rotation généré par l'excentrique (10) au niveau du boîtier (15.1) de la roue libre (15), et **en ce que** la roue libre (15) présente, entre la bague intérieure et la bague extérieure (15.1), des éléments de transfert de force qui transmettent une force dans le sens de rotation et qui n'agissent pas sur la bague intérieure et la bague extérieure (15.1) dans le sens opposé au sens de rotation.

2. Machine de distribution selon la revendication 1, **caractérisée en ce que** le mouvement généré en translation par le disque d'excentrique (10) définit l'angle de rotation de la roue libre (15).

3. Machine de distribution selon au moins l'une quelconque des revendications précédentes, **caractérisée en ce que** l'élément de liaison (7, 18) est réalisé entre une unité d'entraînement (10) et l'organe agitateur (6).

4. Machine de distribution selon au moins l'une quelconque des revendications précédentes, **caractérisée en ce que** l'élément de liaison (7) est constitué par un empilement de ressorts (18) se composant de préférence de ressorts à lame et/ou un arbre à profil cruciforme.

5. Machine de distribution selon au moins l'une quelconque des revendications précédentes, **caractérisée en ce que** l'élément de liaison (7) disposé entre l'unité d'entraînement et l'organe agitateur (6) est réalisé sous forme élastique rotative et/ou sous forme de ressort de torsion (18) .

6. Machine de distribution selon au moins l'une quelconque des revendications précédentes, **caractérisée en ce que** l'élément de liaison (7) est réalisé sous forme rigide en flexion.

7. Machine de distribution selon au moins l'une quelconque des revendications précédentes, **caractérisée en ce que** l'élément de liaison (7) est réalisé sous forme d'au moins un ressort à lame allongé et sous forme d'un empilement de ressorts (18) réalisé avec plusieurs ressorts à lame disposés les uns à côté des autres.

8. Machine de distribution selon au moins l'une quelconque des revendications précédentes, **caractérisée en ce qu'**il est prévu un arbre creux (20) disposé dans le récipient de stockage (1) et/ou pénétrant dans celui-ci, et **en ce que** l'élément de liaison élastique rotatif est disposé dans cet arbre creux (20).

9. Machine de distribution selon la revendication 8, **caractérisée en ce que** l'arbre creux (20) est disposé de manière à pouvoir tourner au moyen d'éléments de palier (17).

10. Machine de distribution selon l'une quelconque des revendications 8 ou 9, **caractérisée en ce qu'**à l'extrémité libre de l'arbre creux (20) se raccorde directement de préférence l'élément agitateur (6) connecté à l'élément de liaison (7, 18) .

11. Machine de distribution selon au moins l'une quelconque des revendications précédentes, **caractérisée en ce que** la section d'arbre de l'unité d'entraînement, au niveau de son extrémité libre, et la section de fixation connectée à l'organe agitateur (6), présentent à chaque fois au moins une section en forme de fente et **en ce que** l'élément de liaison (7) élastique en rotation, réalisé de préférence sous la forme de plusieurs ressorts à lame (18), est disposé dans ces sections en forme de fente.

12. Machine de distribution selon l'une quelconque des revendications 8 à 10, **caractérisée en ce que** l' arbre creux (20) au niveau de la section d'arbre libre (21) de l'unité d'entraînement est réalisé au niveau de son extrémité sous forme fendue au moins une fois et fait saillie au moins en partie au-delà de la section d'arbre de l'unité d'entraînement.

13. Machine de distribution selon la revendication 12, **caractérisée en ce que** la section d'arbre (21) de l'unité d'entraînement présente, au niveau de son extrémité libre, un profil de type fente cruciforme et la section de fixation connectée à l'organe agitateur présente une section en forme de fente et **en ce que** l'élément de liaison (18) élastique rotatif, réalisé de préférence sous forme d'arbre profilé cruciforme, est disposé dans ces saillies.

14. Machine de distribution comprenant un récipient de stockage selon au moins l'une quelconque des revendications précédentes, **caractérisée en ce que** l'unité d'entraînement est connectée par engagement par correspondance de formes à l'élément de liaison (7, 18).

15. Machine de distribution selon au moins l'une quelconque des revendications précédentes, **caractérisée en ce que** l'élément de liaison (7, 18) élastique rotatif peut être précontraint par rapport à l'unité d'entraînement et à l'organe agitateur (6).
